# EUROPÄISCHE PATENTSCHRIFT

(11) **EP 0 645 922 B1**
(45) Veröffentlichungstag und Bekanntmachung des Hinweises auf die Patenterteilung: **20.08.2003**
(21) Anmeldenummer: 94114450.3
(22) Anmeldetag: 14.09.1994
(51) Int. Cl.: H04M 3/24, H04Q 1/24, H04Q 11/04

(54) **Verfahren zum Überprüfen der Durchschalteelemente einer Raumstufeneinheit eines Koppelnetzes einer digitalen Zeitmultiplex-Fernmeldevermittlungsanlage**
Method for checking the switching elements of a space stage of a switching network in a TDM telecommunication exchange
Procédé pour le contrôle des éléments de commutation d'un étage spatial d'un réseau de commutation d'un centrale de télécommunication à division dans le temps

(30) Priorität: 29.09.1993 DE 4333345
(43) Veröffentlichungstag der Anmeldung: 29.03.1995
(73) Patentinhaber: SIEMENS AKTIENGESELLSCHAFT, 80333 München (DE)
(72) Erfinder: Troost, Marcel-Abraham, Dipl.-Ing., D-81477 München (DE); Unterreitmayer, Hans-Jürgen, Dipl.-Ing., D-80333 München (DE)

(56) Entgegenhaltungen:
- EP-A- 0 162 270
- EP-A- 0 163 288
- FR-A- 2 256 616

## Beschreibung

Die Erfindung betrifft ein Verfahren zum Überprüfen der Durchschalteelemente einer Raumstufeneinheit eines Koppel netzes einer digitalen Zeitmultiplex-Fernmeldevermittlungsanlage.

Eine solche Raumstufeneinheit, die eine Mehrzahl von Eingängen und Ausgängen aufweist, besteht aus einer Mehr zahl von Durchschalteeinheiten, beispielsweise einer Mehr zahl von Multiplexern, die den Eingängen und Ausgängen der Raumstufeneinheit in bestimmter Weise zugeordnet sind.

Um eine solche Raumstufeneinheit zuverlässig überprüfen zu können, ist ein Verfahren erforderlich, durch das sämt liche der erwähnten Durchschalteeinheiten bezüglich sämt licher Durchschaltemöglichkeiten erfaßt werden.

Aus der Europäischen Patentanmeldung EP 0 162 270 A1 ist ein Verfahren zur Durchschalteprüfung eines Raummultiplex-Koppelnetzes bekannt, bei dem die jeweils kleinsten von einer Teilsteuereinheit gesondert beeinflußten Teileinheiten in einem ersten Prüfdurchgang vor einer neu vorzunehmenden Durchschalteprüfung daraufhin überprüft werden, ob am betreffenden Ausgang kein Ausgangssignal auftritt, und an welchen übrigen Ausgängen ein Ausgangssignal auftritt. In einem zweiten Prüfdurchgang wird nach Ausführung der Durchschaltung festgestellt, ob an dem betreffenden einen Ausgang nunmehr ein Ausgangssignal auftritt und ob an den übrigen Ausgängen die Verhältnisse unverändert bleiben. Hierdurch entfällt die Einspeisung eines Prüfsignals am Koppelnetzeingang und die Überwachung auf das Auftreten dieses Prüfsignals am betreffenden Koppelfeldausgang. Dadurch wird ein Prüfvorgang gewährleistet, der die Zentralsteuerung entlastet. Ein zugleich zuverlässiges und schnelles Prüfverfahren mit relativ geringem Hardwareaufwand wird jedoch durch das bekannte Prüfverfahren nicht erreicht.

Die Aufgabe der vorliegenden Erfindung besteht daher darin, ein Verfahren anzugeben, das diesen Anforderungen genügt, vergleichsweise schnell durchgeführt werden kann und relativ geringen Hardwarezusatzaufwand für seine Durchführung erfordert.

Diese Aufgabe wird durch die im Kennzeichen des Patentan spruches angegebenen Merkmale gelöst.

Nachstehend wird das erfindungsgemäße Verfahren anhand eines Ausführungsbeispiels unter Bezugnahme auf eine Figur näher erläutert.

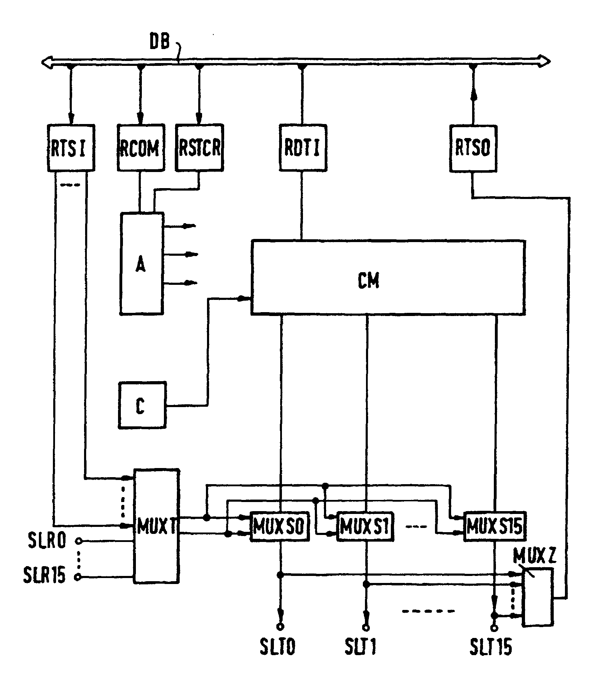

Die Figur zeigt eine Raumstufeneinheit eines Koppelnetzes einer digitalen Zeitmultiplex-Fernmeldevermittlungsanlage in zur Durchführung des erfindungsgemäßen Verfahrens erforderlicher Austattung.

Diese Raumstufeneinheit weist 16 Eingänge SLR0 bis SLR15 für den Anschluß von Zeitmultiplexleitungen der ankommenden Übertragungsrichtung und 16 Ausgänge SLT0 bis SLT15 für den Anschluß von Zeitmultiplexleitungen der abgehenden Übertragungsrichtung auf. Als eigentliche Durchschalteelemente zur wahlweisen Verbindung dieser Eingänge und Ausgänge dienen Multiplexer MUXS0 bis MUXS15, die jeweils einem der Ausgänge SLT0 bis SLT15 individuell zugeordnet sind. Die 16 Eingänge E0 bis E15 dieser Multiplexer sind jeweils mit gleichgeordneten Eingängen der übrigen dieser Multiplexer verbunden.

Ein Koppelspeicher CM enthält in den einzelnen Zeitlagen des Multiplexsystems zugeordneten Speicherplätzen Steueradressen für die Multiplexer MUXS0 bis MUXS15, aufgrund deren diese im Vermittlungsmodus der Raumstufeneinheit jeweils für die Dauer einer aus 8 Takten bestehenden Zeitlage eine Verbindung eines ihrer Eingänge mit ihrem Ausgang herstellen.

Der Koppelspeicher CM wird seinerseits durch einen Zähler C angesteuert.

Dem Koppelspeicher werden die genannten Ansteueradressen jeweils beim Aufbau einer neuen Verbindung aus einem Dateneingaberegister RDTI übergeben.

Die Abläufe der dargestellten Raumstufeneinheit werden durch eine Ablaufsteuerung A beeinflußt, die von einer übergeordneten Steuerung stammende Befehle einem Befehlsübergaberegister RCOM entnimmt. Sie wird ferner von über ein Status- und Kontrollregister RSTCR an sie gelangende Befehle beeinflußt, die den Modus bestimmen, in dem die Raumstufeneinheit arbeitet, nämlich entweder in einem Durchschaltemodus oder in einem Prüfmodus.

Die Figur zeigt ferner ein Testeingaberegister RTSI, dem im Prüfmodus Prüfbitkombinationen entnommen werden können, die über den Multiplexer MUXT an die Eingänge E0 bis E15 der Durchschalteelemente in Form der Multiplexer MUXS0 bis MUXS15 anstelle von Fernmeldeinformationen gelegt werden, die über die Eingänge SLR0 bis SLR15 und ebenfalls den Multiplexer MUXT an die Eingänge der Durchschalteeinheiten gelangen.

Die Figur zeigt ferner ein Testausgaberegister RTS0, von dem im Testmodus die über die Ausgänge der Multiplexer MUXS0 bis MUXS15 ausgegebenen Bitkombinationen aufgenommen werden können.

Sämtliche der erwähnten Register sind an einen bidirektionalen Datenbus DB angeschlossen.

Im Prüfmodus wird nun an jeden Eingang der Multiplexer ein Bit einer ersten Prüfbitkombination dauernd angelegt. Bei dieser Prüfbitkombination weisen sämtliche Bits bis auf eines denselben Binärwert auf.

Es werden dann nacheinander Durchschaltungen von diesen Multiplexereingängen zu den Multiplexerausgängen SLT0 bis SLT15 derart vorgenommen, daß das eine den von den übrigen Bit abweichenden Binärwert aufweisende Bit nacheinander an den Ausgängen SLT0 bis SLT15 erscheint. Über das Dateneingaberegister RDTI werden hierzu entsprechende Ansteueradressen in den Koppelspeicher CM eingetragen. Die an den Ausgängen SLT0 bis SLT15 auftretenden durchgeschalteten Bitkombinationen gelangen dann an das Testausgaberegister RTS0, von wo aus sie über den Datenbus einem Vergleich auf die erwartete Bitkombination zugeführt werden.

Diese Vorgänge sind in der nachfolgenden Tabelle veranschaulicht, bei der eine Hexadezimaldarstellung gewählt ist.

| RTSI 0..15 | Koppelspeicher | erwartet RTS0 0..15 |
|---|---|---|
| 0001h | FEDCBA9876543210h | 0001h |
| 0001h | EDCBA9876543210Fh | 0002h |
| 0001h | DCBA9876543210FEh | 0004h |
| 0001h | CBA9876543210FEDh | 0008h |
| 0001h | BA9876543210FEDCh | 0010h |
| 0001h | A9876543210FEDCBh | 0020h |
| 0001h | 9876543210FEDCBAh | 0040h |
| 0001h | 876543210FEDCBA9h | 0080h |
| 0001h | 76543210FEDCBA98h | 0100h |
| 0001h | 6543210FEDCBA987h | 0200h |
| 0001h | 543210FEDCBA9876h | 0400h |
| 0001h | 43210FEDCBA98765h | 0800h |
| 0001h | 3210FEDCBA987654h | 1000h |
| 0001h | 210FEDCBA9876543h | 2000h |
| 0001h | 10FEDCBA98765432h | 4000h |
| 0001h | 0FEDCBA987654321h | 8000h |
| FFFEh | FEDCBA9876543210h | FFFEh |
| FFFEh | EDCBA9876543210Fh | FFFDh |
| FFFEh | DCBA9876543210FEh | FFFBh |
| FFFEh | CBA9876543210FEDh | FFF7h |
| FFFEh | BA9876543210FEDCh | FFEFh |
| FFFEh | A9876543210FEDCBh | FFDFh |
| FFFEh | 9876543210FEDCBAh | FFBFh |
| FFFEh | 876543210FEDCBA9h | FF7Fh |
| FFFEh | 76543210FEDCBA98h | FEFFh |
| FFFEh | 6543210FEDCBA987h | FDFFh |
| FFFEh | 543210FEDCBA9876h | FBFFh |
| FFFEh | 43210FEDCBA98765h | F7FFh |
| FFFEh | 3210FEDCBA987654h | EFFFh |
| FFFEh | 210FEDCBA9876543h | DFFFh |
| FFFEh | 10FEDCBA98765432h | BFFFh |
| FFFEh | 0FEDCBA987654321h | 7FFFh |

Die linke Spalte der Tabelle zeigt die 16 Bit des ersten Prüfcodewortes, die an die 16 Eingänge E0 bis E15 der Multiplexer MUXS0 bis MUXS15 angelegt sind, wobei die Zuordnung derart sein soll, daß das erste Bit, das den Binärwert 1 (entsprechend 1h) aufweist, am Eingang E0 der Multiplexer anliegen soll, wogegen an den übrigen Eingängen E1 bis E15 jeweils ein Bit des Binärwerts 0 liegt.

Die rechte Spalte zeigt die entsprechend den nacheinander vorgenommenen Durchschaltungen an den Ausgängen SLT0 bis SLT15 auftretenden Bitkombinationen. Aus den ersten 16 Eintragungen erkennt man, daß im Zuge von 16 verschiedenen Durchschaltungen unter der Voraussetzung eines ordnungsgemäßen Betriebs dieser Multiplexer nacheinander an den Ausgängen SLT0 bis SLT15 ein Bit des Binärwerts 1 auftritt.

In der mittleren Spalte der Tabelle sind die entsprechenden Ansteueradressen eingetragen, die für die Herbeiführung der entsprechenden Durchschaltungen nacheinander in eine bestimmte, aber an sich beliebige Speicherstelle in den Koppelspeicher einzutragen sind. Es ist hierbei eine Koppelspeicherstruktur, bestehend aus 4 gleichen Lesespeichern, vorausgesetzt, die jeweils 16 Bit breite Adressen aufnehmen. Im hier betrachteten Prüfmodus ist dafür Sorge getragen, daß immer nur aus dieser bestimmten Speicherzelle ausgelesen wird.

Aus der Tabelle ist ferner ersichtlich, daß die geschilderten Voränge in 16 weiteren Durchschaltungen mit einer zweiten Prüfbitkombination wiederholt werden, die gegenüber der ersten Prüfbitkombination invertiert ist.

Mit den durch die Tabelle veranschaulichten Durchschaltungen ist sowohl für den einen als auch für den anderen Binärwert geprüft, ob eine ordnungsgemäße Durchschaltung vom ersten Eingang E0 auf jeden der Ausgänge SLT0 bis SLT15 erfolgt.

Für eine vollständige Prüfung ist es erforderlich, diese Vorgänge für jeden anderen der Eingänge E1 bis E15 zu wiederholen, also mit ersten und zweiten Prüfbitkombinationen, durch die das eine Bit mit dem Binärtwert 1 bzw. das eine Bit mit dem Binärwert 0 am zweiten bis fünfzehnten Eingang der Multiplexer anliegen.

## Patentansprüche

1. Verfahren zum Überprüfen der Durchschalteelemente einer Raumstufeneinheit eines Koppelnetzes einer digitalen Zeitmultiplex-Fernmeldevermittlungsanlage,
**dadurch gekennzeichnet,**
**daß** in einem alternativ zu einem Vermittlungsmodus wirksamen Prüfmodus den Eingängen der Raumstufeneinheit anstelle von Fernmeldeinformationen jeweils ein Bit einer ersten Prüfbitkombination dauernd anliegend zugeführt wird, bei der sämtliche Bits bis auf eines denselben Binärwert aufweisen, daß in einem ersten Schritt jeweils die Durchschaltung dieser Bitkombination mehrfach in der Weise vorgenommen wird, daß bei ordnungsgemäßem Betrieb bei jeder Durchschaltung das eine den anderen Binärwert aufweisende Bit zu einen anderen der Ausgänge der Raumstufeneinheit gelangt, daß solche Durchschaltungen in einem zweiten Schritt mit einer zweiten Prüfbitkombination wiederholt werden, bei der die Binärwerte gegenüber der ersten Prüfbitkombination invertiert sind, wobei die jeweils an den Ausgängen der Raumstufen auftretenden Bitkombinationen anstelle der im Durchschaltemodus erfolgenden Weitergabe an weiterführende Zeitmultiplexleitungen einer Überprüfung auf Vorliegen eines erwarteten Bitmusters zugeführt werden, und daß der erste und zweite Schritt mit entsprechend geänderten Prüfbitkombinationen solange wiederholt wird, bis von jedem Eingang der Raumstufe aus eine Durchschaltung eines in seinem Binärwert von den übrigen Prüfbits der Prüfbitkombination abweichenden Prüfbits erfolgt ist.

## Claims

1. Method for checking the switching elements in a space-switch unit in a switching matrix in a digital time-division multiplex telecommunication exchange,
**characterized**
**in that** a test mode active as an alternative to a switching mode involves the inputs of the space-switch unit each being continuously supplied with, instead of telecommunication information, a bit of a first test bit combination in which all the bits except for one have the same binary value, in that, in a first step, this bit combination is respectively connected a plurality of times such that, during correct operation, each connection involves one bit which has the other binary value being passed to another of the outputs of the space-switch unit, in that such connections are repeated in a second step using a second test bit combination in which the binary values of the inverse of the first test bit combination, with the respective bit combinations which appear at the outputs of the space stages being supplied to a check for the presence of an expected bit pattern instead of being forwarded to continuing time-division multiplex lines, as occurs in switching mode, and in that the first and second steps are repeated using appropriately changed test bit combinations until every input in the space stage has connected a test bit whose binary value differs from that of the rest of the test bits in the test bit combination.

## Revendications

1. Procédé pour le contrôle des éléments de commutation d'un étage spatial d'un réseau de commutation d'une centrale de télécommunication à division dans le temps, **caractérisé en ce que** dans un mode de contrôle efficace alternatif à un mode de commutation un bit respectivement d'une première combinaison de bits de contrôle est transmis de manière à être présent en permanence aux entrées de l'étage spatial au lieu des informations téléphoniques, dans laquelle tous les bits, à l'exception d'un seul, présentent la même valeur binaire, **en ce que** dans une première étape respectivement la commutation de cette combinaison de bits est effectuée à plusieurs reprises de telle sorte qu'en cas de bon fonctionnement l'un des bits présentant une autre valeur binaire est transmis à une autre des sorties de l'étage spatial, **en ce que** ces commutations sont répétées dans une seconde étape avec une seconde combinaison de bits de contrôle, dans laquelle les valeurs binaires sont inversées par rapport à la première combinaison de bits de contrôle, les combinaisons de bits apparaissant respectivement aux sorties des étages spatiaux à la place de la transmission effectuée en mode de commutation étant soumises à un contrôle de présence d'une configuration binaire attendue au lieu de la transmission effectuée en mode de commutation à des canaux à multiplexage dans le temps assurant leur transfert, et **en ce que** la première et la seconde étapes sont répétées avec des combinaisons de bits de contrôle modifiées en conséquence, jusqu'à ce qu'une commutation d'un bit de contrôle, dont la valeur binaire diffère des autres bits de contrôle de la combinaison de bits de contrôle, soit effectuée à partir de chaque entrée de l'étage spatial.
